# EUROPEAN PATENT APPLICATION

(11) **EP 4 616 976 A1**
(43) Date of publication of application: **17.09.2025**
(21) Application number: 23888401.9
(22) Date of filing: 07.10.2023
(51) Int. Cl.: B22F 5/04, B22F 9/08, C22C 30/00, C22C 19/05, B33Y 70/00, B22F 10/20, B22F 1/00, C22C 1/04, C22F 1/00, C22F 1/10, C22F 1/16

(54) **NICKEL-COBALT-BASED ALLOY, NICKEL-COBALT-BASED ALLOY MEMBER USING SAME, AND METHOD FOR MANUFACTURING SAME**

(30) Priority: 09.11.2022 JP 2022179243
(71) Applicant: National Institute for Materials Science, Tsukuba-shi, Ibaraki 305-0047 (JP)
(72) Inventor: OSADA, Toshio, Tsukuba-shi, Ibaraki 305-0047 (JP); OSAWA, Makoto, Tsukuba-shi, Ibaraki 305-0047 (JP); HARADA, Hiroshi, Tsukuba-shi, Ibaraki 305-0047 (JP); KAWAGISHI, Kyoko, Tsukuba-shi, Ibaraki 305-0047 (JP); IKEDA, Ayako, Tsukuba-shi, Ibaraki 305-0047 (JP); MORI, Yuhi, Tsukuba-shi, Ibaraki 305-0047 (JP); KOHATA, Takuma, Tsukuba-shi, Ibaraki 305-0047 (JP); MINAGAWA, Kazumi, Tsukuba-shi, Ibaraki 305-0047 (JP); HIROSAWA, Masashi, Tsukuba-shi, Ibaraki 305-0047 (JP); YUYAMA, Michinari, Tsukuba-shi, Ibaraki 305-0047 (JP); TAKATA, Yuji, Tsukuba-shi, Ibaraki 305-0047 (JP)
(74) Representative: Wimmer, Hubert
(86) International application number: PCT/JP2023/036655
(87) International publication number: WO 2024/101048

(57) **Abstract**

The present invention provides an alloy that is excellent in oxidation resistance and structure stability, having high strength and a significantly improved temperature capability, and that is suitable for turbine disk applications. The nickel-cobalt-based alloy of the present invention has a composition comprising: 15% by mass or more and 43% by mass or less of cobalt; 6% by mass or more and less than 12% by mass of chromium; 3% by mass or more and 9% by mass or less of tungsten; 1% by mass or more and 6% by mass or less of aluminum; 1% by mass or more and 8% by mass or less of titanium; 7% by mass or less of tantalum; 0.01% by mass or more and 0.15% by mass or less of carbon; 0.01% by mass or more and 0.15% by mass or less of boron; 0.01 mass or more and 0.15% by mass or less of zirconium; and the balance nickel and inevitable impurities.

## Description

### Technical Field

The present invention relates to a nickel-cobalt-based alloy, a nickel-cobalt-based alloy member using the same, and a method for manufacturing the same.

### Background Art

Conventionally, a nickel-based alloy is used as a heat-resistant member for an aircraft engine or a power-generating gas turbine, particularly as a turbine disk. The heat-resistant member such as the turbine disk is required to have excellent strength such as creep strength and fatigue strength as well as high-temperature oxidation resistance. Therefore, a nickel-based alloy having high-temperature oxidation resistance by adding chromium has been proposed. As an example of the nickel-based alloy, there has been known a nickel-based alloy containing, with respect to the total amount, Cr in a range of 11.5 to 11.9% by mass, Co in a range of 25 to 29% by mass, Mo in a range of 3.4 to 3.7% by mass, W in a range of 1.9 to 2.1% by mass, Ti in a range of 3.9 to 4.4% by mass, Al in a range of 2.9 to 3.2% by mass, C in a range of 0.02 to 0.03% by mass, B in a range of 0.01 to 0.03% by mass, Zr in a range of 0.04 to 0.06% by mass, Ta in a range of 2.1 to 2.2% by mass, Hf in a range of 0.3 to 0.4% by mass, Nb in a range of 0.5 to 0.8% by mass, and the balance Ni and inevitable impurities (see Patent Literature 1).

In addition, as the nickel-based alloy, there has been known a nickel-based alloy containing, with respect to the total amount, Co in a range of 20 to 40% by mass, Cr in a range of 10 to 15% by mass, Mo in a range of 3 to 6% by mass, W in a range of 0 to 5% by mass, Ti in a range of 3.4 to 5% by mass, Al in a range of 2.5 to 4% by mass, C in a range of 0.01 to 0.05% by mass, B in a range of 0.01 to 0.05% by mass, Zr in a range of 0 to 0.1% by mass, Ta in a range of 1.35 to 2.5% by mass, Hf in a range of 0.5 to 1% by mass, and Nb in a range of 0 to 2% by mass (see Patent Literature 2).

Furthermore, as the nickel-based alloy, there has been known a nickel-based alloy containing, with respect to the total amount, Cr in a range of 11 to 15% by mass, Co in a range of 14 to 23% by mass, Mo in a range of 2.7 to 5% by mass, W in a range of 0.5 to 3% by mass, Ti in a range of 3 to 6% by mass, Al in a range of 2 to 5% by mass, C in a range of 0.015 to 0.1% by mass, B in a range of 0.015 to 0.045% by mass, Zr in a range of 0.015 to 0.15% by mass, Ta in a range of 0.5 to 4% by mass, Hf in a range of 0 to 2% by mass, and Nb in a range of 0.25 to 3% by mass (see Patent Literature 3).

### Citation List

### Patent Literature

Patent Literature 1: WO 2012/063879 A
Patent Literature 2: US 2009/0087338 A
Patent Literature 3: EP 1195446 A

### Non Patent Literature

Non Patent Literature 1: Hiroshi HARADA and Michio YAMAZAKI, "Alloy Design for γ' Precipitation Hardening Nickel-base Superalloys Containing Ti, Ta, and W", Tetsu-to-Hagane, Vol. 65, pp. 1059-1068 (1979)

Non Patent Literature 2: Hidehiro ONODERA, Yoshihito RO, Toshihiro YAMAGATA and Michio YAMAZAKI, "The Effect of Tensile Strength and Ductility on High Temperature Low Cycle Fatigue of Cast Ni-base Superalloys", Tetsu-to-Hagane, Vol. 71, pp. 85-91 (1985)

### Summary of Invention

### Technical Problem

The present applicant has carried out the development of nickel-based alloys of conventional casting (CC) materials, directional solidification (DS) materials, and single crystal (SC) materials that can be used as turbine blades since the 1970s for many years. By effectively utilizing the database accumulated through these efforts and the independently developed "alloy design program", a nickel-based alloy having excellent high-temperature characteristics in each of CC materials and SC materials has been successfully developed (for example, JP 3814662 B2). More recently, using the nickel-based alloy as described in Patent Literature 1 manufactured by a powder metallurgy method, a heat-resistant member having an excellent temperature capability (a temperature at which a life is 1000 hours at 630 MPa) suitable for turbine disk applications has been successfully developed. The developed powder metallurgy (PM) materials and cast and wrought (C&W) materials having similar compositions have excellent temperature capabilities as PM materials and C&W materials, respectively.

In recent years, PM materials having a homogeneous structure tend to be mainly used for a turbine disk for a high temperature and high pressure section requiring high reliability. This is because by utilizing a rapid cooling and solidification process in a gas atomized powder manufacturing process, it is possible to design an alloy to which a large amount of heavy elements such as Mo, Hf, Nb, and Ta, which are strengthening elements whose addition amount is limited in C&W materials due to the influence of segregation, are added. However, the temperature capability of the PM materials has improved only by 22°C in 28 years from 693°C (IN100) in 1974 to 715°C (ME3) in 2002 (improvement rate: 0.79°C/year), and further, the addition of Mo, Hf, Nb, Ta, or the like causes a decrease in structure stability, oxidation resistance, and the like. Therefore, in order to further improve engine performance, it is necessary to develop an alloy based on a new design method.

### Solution to Problem

The present inventors have arrived at the present invention considering that it is possible to significantly improve the temperature capability of an alloy for a turbine disk if the alloy design based on a nickel-based alloy (referred to as a TM alloy) developed by the present applicant for a turbine blade in the 1970s is applied, instead of the conventional high functionality by improving an existing alloy for a turbine disk.

That is, since the composition of the alloy for a turbine blade is designed assuming use at 900°C or higher, the alloy for a turbine blade tends to be superior in oxidation resistance and corrosion resistance to the alloy for a turbine disk assuming use at 700°C or lower. Therefore, the present inventor has conceived that, if using an alloy for a turbine blade as the base, oxidation resistance and structure stability can be improved by reducing the addition amounts of Mo, Nb, and Hf, and strength enhancement can be achieved by adding elements other than these elements, realization of an alloy for a turbine disk having a significantly improved durable temperature can be expected, and have arrived at the present invention.
[1] A nickel-cobalt-based alloy of the present invention comprising a chemical composition containing (consisting of):
   15% by mass or more and 43% by mass or less of cobalt;
   6% by mass or more and less than 12% by mass of chromium;
   3% by mass or more and 9% by mass or less of tungsten;
   1% by mass or more and 6% by mass or less of aluminum;
   1% by mass or more and 8% by mass or less of titanium;
   7% by mass or less of tantalum;
   0.01% by mass or more and 0.15% by mass or less of carbon;
   0.01% by mass or more and 0.15% by mass or less of boron;
   0.01 mass or more and 0.15% by mass or less of zirconium; and the balance nickel and inevitable impurities.
[2] In the nickel-cobalt-based alloy [1] of the present invention, it is preferable that the composition contains:
   15% by mass or more and 43% by mass or less of cobalt;
   6% by mass or more and less than 12% by mass of chromium;
   3% by mass or more and 9% by mass or less of tungsten;
   1% by mass or more and 6% by mass or less of aluminum;
   1% by mass or more and 8% by mass or less of titanium;
   1.7% by mass or more and 7% by mass or less of tantalum;
   0.01% by mass or more and 0.15% by mass or less of carbon;
   0.01% by mass or more and 0.15% by mass or less of boron;
   0.01 mass or more and 0.15% by mass or less of zirconium; and the balance nickel and inevitable impurities.
[3] In the nickel-cobalt-based alloy [1] or [2] of the present invention, it is preferable that the composition contains:
   15% by mass or more and 35% by mass or less of cobalt;
   7% by mass or more and less than 12% by mass of chromium;
   5.5% by mass or more and 8.5% by mass or less of tungsten;
   2% by mass or more and 4% by mass or less of aluminum;
   4% by mass or more and 7% by mass or less of titanium;
   1.7% by mass or more and 7% by mass or less of tantalum;
   0.01% by mass or more and 0.15% by mass or less of carbon;
   0.01% by mass or more and 0.15% by mass or less of boron;
   0.01 mass or more and 0.15% by mass or less of zirconium; and the balance nickel and inevitable impurities.
[4] In the nickel-cobalt-based alloys [1] to [3] of the present invention, it is preferable that the composition contains:
   15% by mass or more and 35% by mass or less of cobalt;
   8% by mass or more and less than 12% by mass of chromium;
   6.0% by mass or more and 8.0% by mass or less of tungsten;
   2% by mass or more and 4% by mass or less of aluminum;
   4% by mass or more and less than 6.1% by mass of titanium;
   1.7% by mass or more and 7% by mass or less of tantalum;
   0.01% by mass or more and 0.15% by mass or less of carbon;
   0.01% by mass or more and 0.15% by mass or less of boron;
   0.01 mass or more and 0.15% by mass or less of zirconium; and
   the balance nickel and inevitable impurities. The composition [4] includes a composition range of base alloy 1 + (5% to 30%) x (Co-12.5% by mass Ti) based on the composition ranges of example alloys 1 to 3 described later.
[5] In the nickel-cobalt-based alloys [1] to [4] of the present invention, it is preferable to further contain at least one optional composition element selected from the group consisting of:
   less than 1.5% by mass of molybdenum;
   5% by mass or less of niobium; and
   2% by mass or less of hafnium.
[6] In the nickel-cobalt-based alloys [1] to [5] of the present invention, it is preferable to further contain at least one optional composition element selected from the group consisting of:
   0.5% by mass or less of vanadium;
   0.1% by mass or less of silicon;
   0.05% by mass or less of calcium;
   0.2% by mass or less of yttrium; and
   0.2% by mass or less of a lanthanoid element.
[7] Among the nickel-cobalt-based alloys [1] to [6], preferred is a nickel-cobalt-based alloy having a characteristic in which precipitates harmful to strength are not precipitated in an amount of 1.0% by volume or more, preferably 0.5% by volume or less, and more preferably 0.1% by volume or less in a structure stability test at 850°C for 3000 hours. The precipitates harmful to strength include a topologically close packed (TCP) phase, a beta phase, and a Laves phase.
[8] Among the nickel-cobalt-based alloys [1] to [6], preferred is a nickel-cobalt-based alloy in which a 0.2% proof stress at 800°C and a strain rate of 10⁻⁵ (/s) is 780 MPa or more, preferably 890 MPa or more, and more preferably 900 MPa or more.
[9] The nickel-cobalt-based alloy member of the present invention includes any one of the nickel-cobalt-based alloys [1] to [6].
[10] The nickel-cobalt-based alloy member [9] of the present invention is preferably a turbine disk.
[11] A method for manufacturing a nickel-cobalt-based alloy member of the present invention is a method in which the nickel-cobalt-based alloy member [9] is manufactured by one or more methods selected from the group consisting of casting including a directional solidification method, conventional forging, powder metallurgy, lamination molding using a powder, and three-dimensional molding using a wire.
[12] A method for manufacturing a nickel-cobalt-based alloy member of the present invention is a method in which the nickel-cobalt-based alloy turbine disk [10] is manufactured by one or more methods selected from the group consisting of casting including a directional solidification method, conventional forging, powder metallurgy, lamination molding using a powder, and three-dimensional molding using a wire.
[13] In the method [11] or [12] for manufacturing a nickel-cobalt-based alloy member of the present invention, it is preferable that the metal powder is a metal powder manufactured by a gas atomization method.

Hereinafter, the reason why the composition elements of the nickel-cobalt-based alloy of the present invention and the content thereof are limited as described above will be described. In the following description, % representing the content is % by mass.

Cobalt (Co) is a component useful for controlling the solvus temperature of the γ' (gamma prime) phase of nickel-based alloys and nickel-cobalt-based alloys, and an increase in the amount of cobalt decreases the γ' solvus temperature, increases the process tolerance, and also produces an effect of improving forgeability. In particular, when titanium is contained in a large amount, it is desirable to add a slightly larger amount of cobalt in order to suppress the TCP phase and improve high-temperature strength. However, when the content of cobalt is too large, high-temperature strength decreases, and therefore the content of cobalt is usually 15% by mass or more and 43% by mass or less, and preferably 15% by mass or more and 35% by mass or less.

Chromium (Cr) is added for improving environmental resistance and fatigue crack propagation characteristics. In order to improve these characteristics, when the content is less than 6% by mass, desirable characteristics cannot be obtained, and when the content exceeds 12% by mass, a precipitated phase that reduces strength is likely to be generated. Therefore, the content of chromium is 6% by mass or more and 12% by mass or less, preferably 7% by mass or more and 12% by mass or less, and more preferably 8% by mass or more and 12% by mass or less.

Tungsten (W) is an element that is dissolved in the γ phase and the γ' phase, strengthens both phases, and is effective for improving high-temperature strength. When the content of W is less than 3% by mass, sufficient improvement in high-temperature strength cannot be obtained. On the other hand, when the content of W exceeds 9% by mass, high-temperature corrosion resistance may be deteriorated. Therefore, the content of tungsten is 3% by mass or more and 9% by mass or less, preferably 5.5% by mass or more and 8.5% by mass or less, and more preferably 6% by mass or more and 8% by mass or less.

Aluminum (Al) is an element that promotes the formation of the γ' phase, and the amount of the γ' phase is adjusted mainly by the content of aluminum. The content of aluminum is 1% by mass or more and 6% by mass or less, and preferably 2% by mass or more and 4% by mass or less. In addition, since the content ratio of titanium and aluminum is strongly related to the generation of the η phase as a harmful phase, it is preferable to increase the content of aluminum as much as possible in order to suppress this η phase. Furthermore, aluminum is a source material for forming aluminum oxide on the surface of a nickel-based heat-resistant superalloy, and also contributes to improvement in oxidation resistance.

Titanium (Ti) is a desirable additive element for strengthening the γ' phase and leading to strength improvement, and combined addition with cobalt realizes a nickel-based alloy and a nickel-cobalt-based alloy having excellent phase stability and high strength. Specifically, by adding a cobalt-titanium alloy (for example, Co-12.5% by mass Ti used in Examples described later) having the same γ + γ' two-phase structure, to a nickel-based alloy or a nickel-cobalt-based alloy having a γ + γ' two-phase structure, the combined addition of cobalt and titanium described above can be efficiently performed, and a nickel-based alloy and a nickel-cobalt-based alloy having a stable structure and high strength while containing a large amount of titanium can be realized. The content of titanium is usually 1% by mass or more and 8% by mass or less, preferably 4% by mass or more and 7% by mass or less, and more preferably 4% by mass or more and 6.1% by mass or less.

Tantalum (Ta) mainly substitutes Al sites of the γ' phase to contribute to precipitation strengthening. On the other hand, when the content of tantalum exceeds 7% by mass, a σ phase or a µ phase as a harmful phase is formed, and the high-temperature strength tends to decrease. Therefore, the content of tantalum is 7% by mass or less, and when the content of tantalum is less than 1.7% by mass, precipitation strengthening is often insufficient, and therefore the content of tantalum is preferably 1.7% by mass or more and 7% by mass or less.

Carbon (C) is an element effective for improving ductility and creep characteristics at a high temperature. Usually, the content of carbon is 0.01% by mass or more and 0.15% by mass or less.

Boron (B) can improve creep characteristics, fatigue characteristics, and the like at a high temperature. Usually, the content of boron is 0.01% by mass or more and 0.15% by mass or less. When the contents of carbon and boron exceed the above content ranges, creep strength may be decreased or process tolerances may be narrowed.

Zirconium (Zr) is an element effective for improving ductility, fatigue characteristics, and the like. Usually, the content of zirconium is 0.01% by mass or more and 0.15% by mass or less.

Molybdenum (Mo) has an effect of mainly strengthening the γ phase and improving creep characteristics. Molybdenum is an element having a high density, and therefore when the content of molybdenum is too large, the density of the nickel-based alloy and the nickel-cobalt-based alloy increases, which is not practically preferable. Usually, the content of molybdenum is less than 1.5% by mass.

Niobium (Nb) is effective as a strengthening element contributing to reduction in specific gravity, but when the content thereof is increased to some extent, there is a possibility that generation of a harmful phase or hot cracking occurs at a high temperature. Usually, the content of niobium is 5% by mass or less.

Hafnium (Hf) is a grain boundary segregating element, and segregates at a crystal grain boundary to strengthen the grain boundary, thereby improving high-temperature strength. When the content of hafnium exceeds 2% by mass, local melting may be caused to reduce the high-temperature strength, which is not preferable. Therefore, the content of hafnium is 2% by mass or less.

Vanadium (V) is an element that mainly forms a solid solution in the γ' phase and strengthens the γ' phase. The content of V is preferably 0.5% by mass or less. This is because when the content of V exceeds 0.5% by mass, the creep strength is lowered.

Silicon (Si) may improve oxidation resistance as a protective film by forming a SiO₂ film on an alloy surface, and may also improve TMF characteristics by suppressing generation of micro cracks from the alloy surface. The content of silicon is 0.1% by mass or less. When the content exceeds 0.1% by mass, the solid solubility limit of other elements is lowered, and therefore required thermo-mechanical fatigue (TMF) characteristics and creep characteristics cannot be obtained.

Calcium (Ca), yttrium (Y), and a lanthanoid elements all enhance the adhesion of a Cr₂O₃ protective film and an Al₂O₃ protective film on the alloy surface, and particularly enhance oxidation resistance during repeated oxidation. Therefore, these elements may be contained as necessary. However, when the content of these elements is excessive, inclusions such as oxides increase, and hot workability and weldability deteriorate. Therefore, the content of calcium is 0.05% or less, and the contents of yttrium and the lanthanoid element are both 0.2% or less.

Any one of the V, Si, Ca, Y, and the lanthanoid element described above can be contained alone, or two or more thereof can be contained in combination.

### Advantageous Effects of Invention

By using the nickel-cobalt-based alloy of the present invention, it is possible to prolong the life of a member used in a high-temperature environment such as a gas turbine member and to improve the efficiency of a gas turbine main body or the like by using the member in a more severe environment, and application to a hydrogen mixed combustion/hydrogen gas turbine, an ammonia mixed combustion gas turbine or the like that is planned in the future is also expected.

### Brief Description of Drawings

Fig. 1 is a graph showing a comparison of the yields of powders having a powder particle size of 53 µm or less in a part of example alloys and comparative alloys.
Fig. 2 is a graph showing an example of the relative density of the prepared HIP materials of a base alloy and an example alloy.
Fig. 3 is a photograph showing an appearance of PM material extruded samples of example alloy 2 and example alloy 5.
Fig. 4 is an inverse pole figure orientation map (IPF map) showing a comparison of microstructures before and after PM material extrusion processing of example alloy 2 and example alloy 5.
Fig. 5A is a scanning electron microscope (SEM) photograph showing a microstructure of example alloy 2 (aging at 870°C).
Fig. 5B is a scanning electron microscope (SEM) photograph showing a microstructure of example alloy 2 (two-step aging).
Fig. 5C is a scanning electron microscope (SEM) photograph showing a microstructure of comparative alloy 2 (two-step aging).
Fig. 6 is a scanning electron microscope (SEM) photograph showing results of structure observation of a part of example alloys aged for a long time (3000 hours), showing cases of aging temperatures of 650, 750, and 850°C for each of base alloy 1 and example alloys 1 to 4.
Fig. 7 is scanning electron microscope (SEM) photographs showing the structure stability (3000 hour aged material) after long-time aging of some of the comparative alloys, showing cases of aging temperatures of 650, 750, and 850°C for each of comparative alloy 4 and comparative alloy 5.
Fig. 8 is a graph showing results of a creep rupture test at 800°C and 375 MPa for comparative alloys and base alloys.
Fig. 9A is a graph showing results of a creep rupture test at 800°C and 375 MPa for each of base alloys 1 and 2 and example alloys 1 to 7.
Fig. 9B is a scanning electron microscope (SEM) photograph showing an initial structure of example alloy 4.
Fig. 10A is a graph showing creep curves for C&W materials of example alloy 2 and comparative alloy 2, which are overall curves up to a region where the creep strain exceeds 5%.
Fig. 10B is a graph showing creep curves for C&W materials of example alloy 2 and comparative alloy 2, which are curves obtained by enlarging a region where the creep strain is up to 1%.
Fig. 11 is a plot showing temperature capabilities of C&W alloys by a conventional cast and wrought process, conventional nickel-cobalt-based alloys by a powder metallurgy process, and example alloy 2, in which the vertical axis indicates temperature capability and the horizontal axis indicates development year.
Fig. 12 is a graph showing high-temperature compressive strength of a base alloy and example alloys, showing a 0.2% proof stress at 725°C and 800°C.
Fig. 13 is a graph showing results of an isothermal oxidation test of some of the example alloys.

### Description of Embodiments

Hereinafter, a nickel-cobalt-based alloy and a nickel-cobalt-based alloy member of the present invention will be described in more detail with reference to Examples. Of course, the present invention is not limited by the following examples.

### Examples

### <Design of example alloys and description (selection) of comparative alloys>

Example alloys were designed such that the combined addition of cobalt and titanium described above was performed by adding a cobalt-titanium alloy (Co-12.5% by mass Ti) to a nickel-based alloy (base alloy) having a γ + γ' two-phase structure. Candidates for base alloys were selected from a group of TM alloys developed by the present applicant for turbine blades. At this time, from the viewpoint of the ability to form a grain boundary strengthening carbide and the disk weight, the selection criteria were that the Cr content as a main carbide forming element was 9.5% by mass or more and the density was 8.5 g/cm³ or less. The compositions of base alloy 1 selected from the group of TM alloys (see Non Patent Literature 1) and a group of alloys obtained by adding Co-12.5% by mass Ti to base alloy 1 (example alloys 1 to 5), and base alloy 2 (see Non Patent Literature 2) and a group of alloys obtained by adding Co-12.5% by mass Ti to base alloy 2 (example alloys 6 and 7) are shown in Table 1.

For example, the composition of example alloy 1 is obtained by adding 10% by mass of Co-12.5% by mass Ti to the composition of base alloy 1 (see the comment column of Table 1), and the Co content (17.3% by mass) thereof is obtained by adding 87.5% by mass (Co content of the above cobalt-titanium alloy) × 0.1 = 8.75% by mass to 9.5% by mass (Co content of base alloy 1) × 0.9 = 8.55% by mass. Similarly, the Ti content of example alloy 1 is calculated as (3.90 × 0.9) + (12.5 × 0.1) = 4.76. The contents of Cr, W, Al, and Ta are each obtained by multiplying the content in base alloy 1 by 0.9. Note that, in example alloy 5, 0.7% by mass of Al is further added to a composition (that is, the composition of example alloy 2) obtained by adding 20% by mass of Co-12.5% by mass Ti to the composition of base alloy 1.

Further, in order to verify the superiority of the example alloys, as comparative alloys, commercially available comparative alloy 1 and comparative alloy 2, which are C&W materials, and comparative alloy 3, comparative alloy 4, and comparative alloy 5, which are PM materials, were selected. These compositions are also shown in Table 1.

### <Composition list of example alloys and comparative alloys (single crystal material)>

**[Table 1]**

| **Alloy Name** | **% by mass** | | | | | | | | | | | | | **Comments** |
|---|---|---|---|---|---|---|---|---|---|---|---|---|---|---|
| | **Co** | **Cr** | **Mo** | **W** | **Al** | **Ti** | **Nb** | **Ta** | **Hf** | **C** | **B** | **Zr** | **Ni** | |
| **Base Alloy 1** | 9.5 | 12.8 | - | 8.70 | 3.70 | 3.90 | - | 2.60 | - | 0.02 | 0.02 | 0.03 | bal. | Polycrystalline Ni-based alloy for turbine blade developed by NIMS |
| **Example Alloy 1** | 17.3 | 11.5 | - | 7.83 | 3.33 | 4.76 | - | 2.34 | - | 0.02 | 0.02 | 0.03 | bal. | Base Alloy 1 + 10% by mass (Co-12.5% by mass Ti) |
| **Example Alloy 2** | 25.1 | 10.2 | - | 6.96 | 2.96 | 5.62 | - | 2.08 | - | 0.02 | 0.02 | 0.03 | bal. | Base Alloy 1 + 20% by mass (Co-12.5% by mass Ti) |
| **Example Alloy 3** | 32.9 | 9.0 | - | 6.09 | 2.59 | 6.48 | - | 1.82 | - | 0.02 | 0.02 | 0.03 | bal. | Base Alloy 1 + 30% by mass (Co-12.5% by mass Ti) |
| **Example Alloy 4** | 40.7 | 7.7 | - | 5.22 | 2.22 | 7.34 | - | 1.56 | - | 0.02 | 0.02 | 0.03 | bal. | Base Alloy 1 + 40% by mass (Co-12.5% by mass Ti) |
| **Example Alloy 5** | 25.1 | 10.2 | - | 6.96 | 3.66 | 5.62 | - | 2.08 | - | 0.02 | 0.02 | 0.03 | bal. | Base Alloy 1 + 20% by mass (Co-12.5% by mass Ti) + 0.7% by mass Al |
| **Base Alloy 2** | 11.9 | 12.1 | - | 8.80 | 3.20 | 5.70 | - | - | - | 0.02 | 0.02 | 0.03 | bal. | Polycrystalline Ni-based alloy for turbine blade developed by NIMS |
| **Example Alloy 6** | 19.5 | 10.9 | - | 7.92 | 2.88 | 6.36 | - | - | - | 0.02 | 0.02 | 0.03 | bal. | Base Alloy 2 + 10% by mass (Co-12.5% by mass Ti) |
| **Example Alloy 7** | 27.1 | 9.7 | - | 7.04 | 2.56 | 7.02 | - | - | - | 0.02 | 0.02 | 0.03 | bal. | Base Alloy 2 + 20% by mass (Co-12.5% by mass Ti) |
| **Comparative Alloy 1** | 15.0 | 16.0 | 3.00 | 1.25 | 2.50 | 5.00 | 0.03 | - | - | 0.025 | 0.018 | 0.03 | bal. | Practically used C&W disc material |
| **Comparative Alloy 2** | 25.0 | 13.5 | 2.80 | 1.20 | 2.30 | 6.20 | - | - | - | 0.015 | 0.015 | 0.023 | bal. | C&W disc material developed by NIMS |
| **Comparative Alloy 3** | 27.0 | 11.7 | 3.40 | 1.90 | 3.20 | 4.40 | 0.50 | 2.20 | 0.35 | 0.025 | 0.02 | 0.05 | bal. | PM disc material developed by NIMS |
| **Comparative Alloy 4** | 20.6 | 13.0 | 3.80 | 2.10 | 3.50 | 3.40 | 0.90 | 2.40 | - | 0.02 | 0.02 | 0.03 | bal. | Practically used PM disc material |
| **Comparative Alloy 5** | 18.0 | 12.0 | 2.90 | 3.00 | 3.00 | 3.00 | 1.50 | 4.80 | 0.40 | 0.05 | 0.03 | 0.05 | bal. | PM disc material developed by GE |

### <Experimental production of example alloys and comparative alloys (single crystal material)>

In comparative evaluation, in order to eliminate the influence of the manufacturing process and the structure, SC materials having a composition in which C, B, and Zr as grain boundary strengthening elements were removed from each alloy composition were cast in a directional solidification furnace and used. The cast single crystal sample material round bar (10 mm diameter, 130 mm length) was subjected to a solution treatment at 1200 to 1300°C for 5 hours, and further subjected to an aging heat treatment at 870°C for 20 hours. After the heat treatment, a test piece for a tensile creep test (comparative evaluation test) was prepared from each single crystal sample material round bar.

### <Experimental production of example alloys and comparative alloys (powder sintered material)>

For the purpose of evaluating the suitability of the example alloys to the PM material manufacturing process, powders were prepared by a confined gas atomizing device with some of the example alloys and some of the comparative alloys, and powders having 53 µm or less particle size were classified and subjected to hot isotropic press (HIP) at 1100°C after sealing to obtain a sintered body.

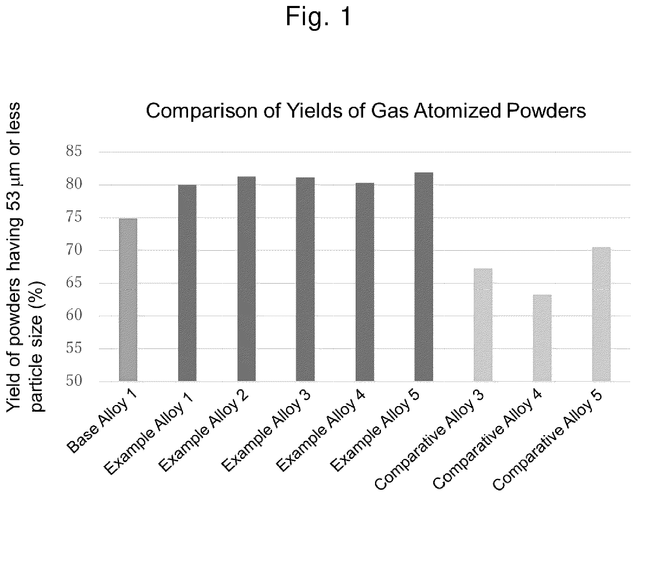

Fig. 1 shows the yield of the powder having 53 µm or less particle size used for sintering. In all of the example alloys, fine powders with more than 70% yield of the powder having 53 µm or less particle size was manufactured.

In addition, fine powders were obtained with higher yields than that of comparative alloy 4, which is a commercial alloy. In addition, it was also confirmed that the yield of the powder described above tend to increase with an increase in the amount of Co-12.5% by mass Ti added to a base alloy. In terms of manufacturing the powder sintered material, higher the yield of a powder subjected to sintering, higher the manufacturing yield, from which example alloys are evaluated to be an alloy system more suitable for powder manufacture low cost and (more suitable for mass production) than comparative alloys.

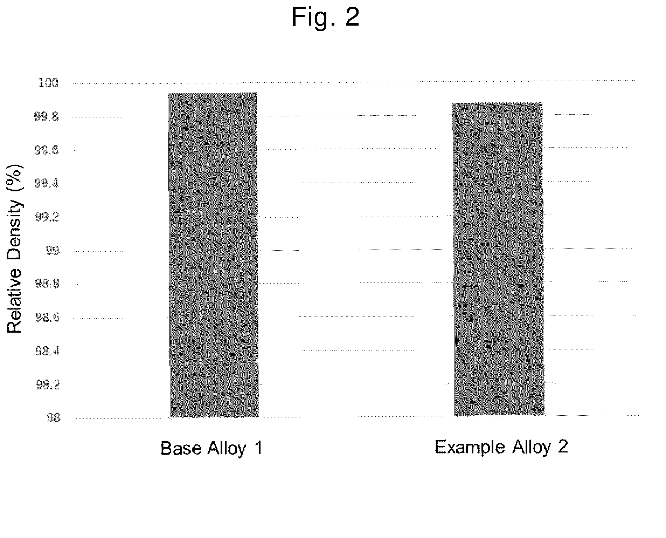

Fig. 2 shows an example of the relative density of HIP materials of the prepared base alloy and example alloy. It is apparent that a good high-density sintered body was obtained in both base alloy 1 and example alloy 2 shown in Fig. 2.

### <Experimental production of example alloys and comparative alloys (wrought material after powder sintering)>

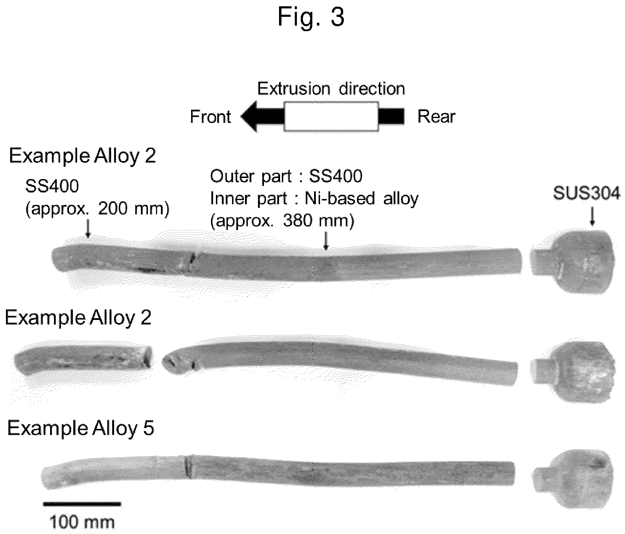

Among the example alloys experimentally produced as powder sintered materials, HIP sintered bodies of example alloy 2 and example alloy 5 were covered with carbon steel (SS400) and stainless steel (SUS304) to prepare billet specimens for extrusion. These billet specimens were subjected to extrusion processing using an existing extrusion processing apparatus in Japan, and extrusion was successful without clogging at a reduction in area Re = 80% (Fig. 3).

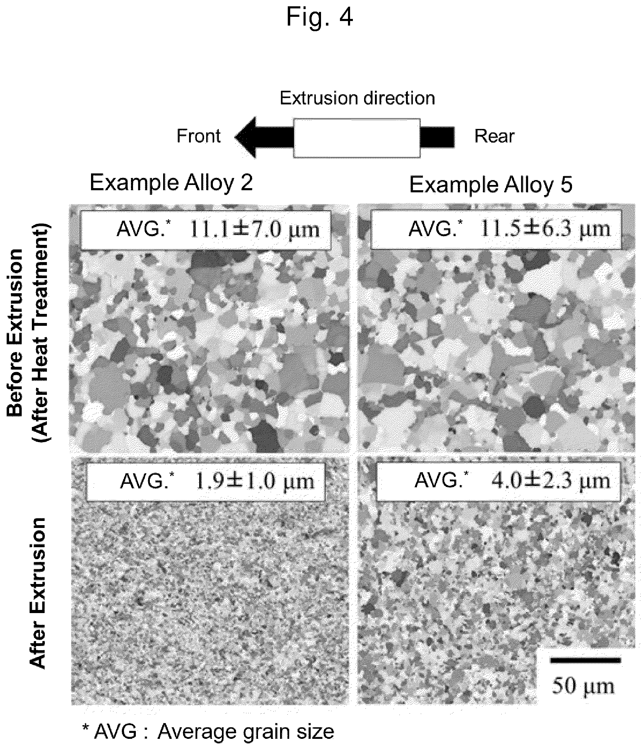

Fig. 4 is inverse pole figure orientation maps (IPF maps) showing microstructures before extrusion processing (after heat treatment) and after extrusion processing of example alloy 2 and example alloy 5. The "average grain size" in Fig. 4 means an average value of crystal grain sizes. Data acquisition by an electron back scattered diffraction pattern (EBSD) method was performed by model TEAM^{™} EDS (manufacturer name: EDAX Division, AMETEK, Inc.). IPF analysis was performed by a software model OIM ver. 8.1.0 (manufacturer name: TSL Solutions K.K.). According to the IPF maps of Fig. 4, in both of example alloy 2 and example alloy 5, relatively uniform fine grains were formed after extrusion processing, and internal cracks and the like were not confirmed. In addition, it was also confirmed that a prior particle boundary (PPB) causing a decrease in strength was eliminated. As described above, it was confirmed that the example alloys have good manufacturability in powder metallurgy process.

### <Experimental production of example alloys and comparative alloys (cast and wrought material)>

Process technique development using vacuum melting, homogenization heat treatment, groove roll, swaging, solution heat treatment, and aging heat treatment was performed on example alloy 2. For comparison, comparative alloy 2, which is a current C&W material, was also manufactured. Plastic working was performed under a preheating condition of 1100°C to prepare swaged materials. The prepared swaged materials of example alloy 2 and comparative alloy 2 were subjected to solution heat treatment at 1160°C and 1100°C/4h/AC, respectively. Further, a two-step aging heat treatment of 650°C/24h/AC + 760°C/16h/AC was performed. For comparison, with respect to example alloy 2, a sample heat-treated at 870°C/20h, which is a standard aging condition of a single crystal model alloy, was also prepared.

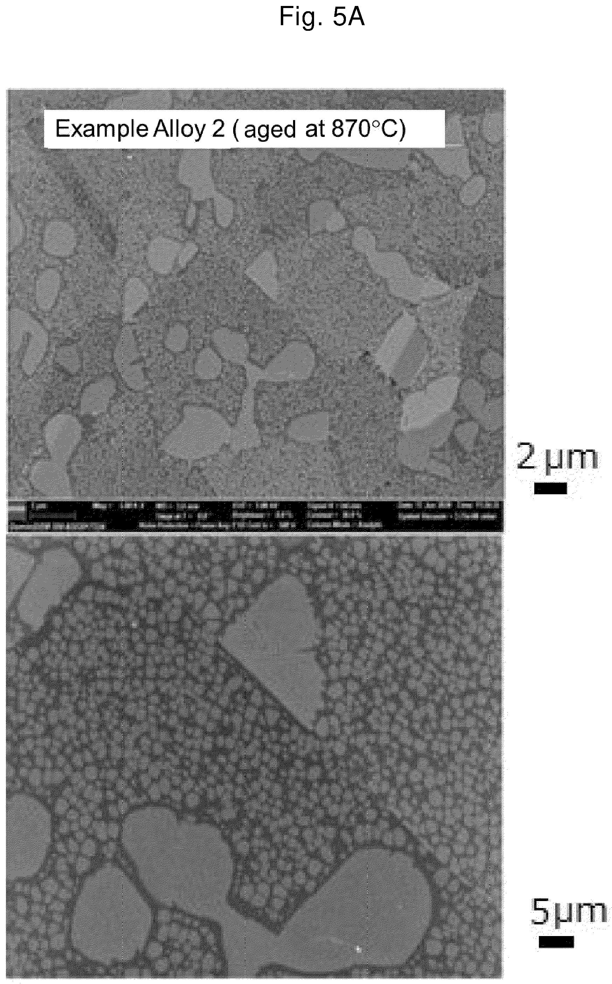

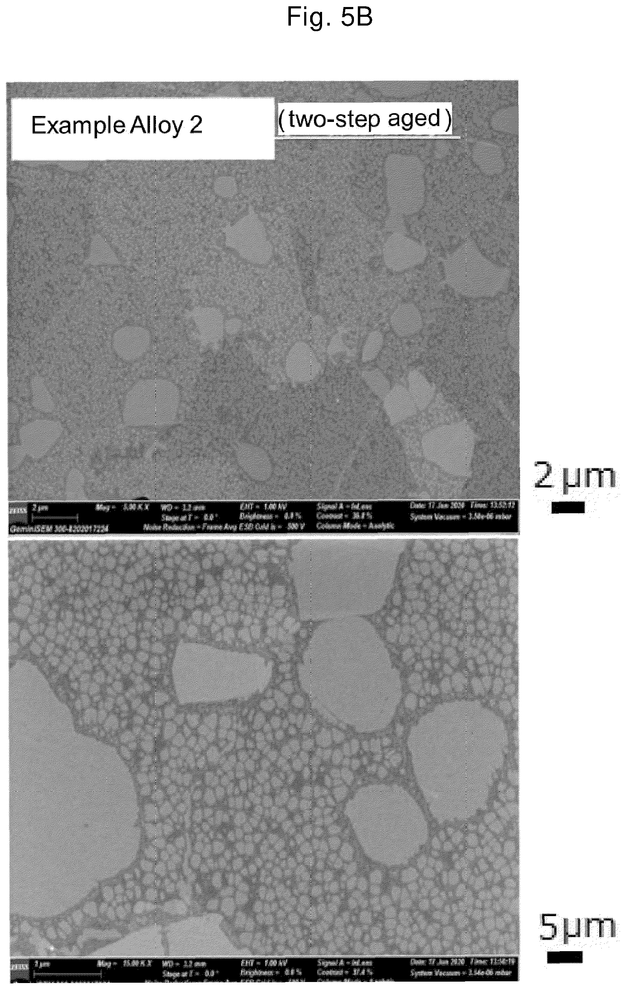

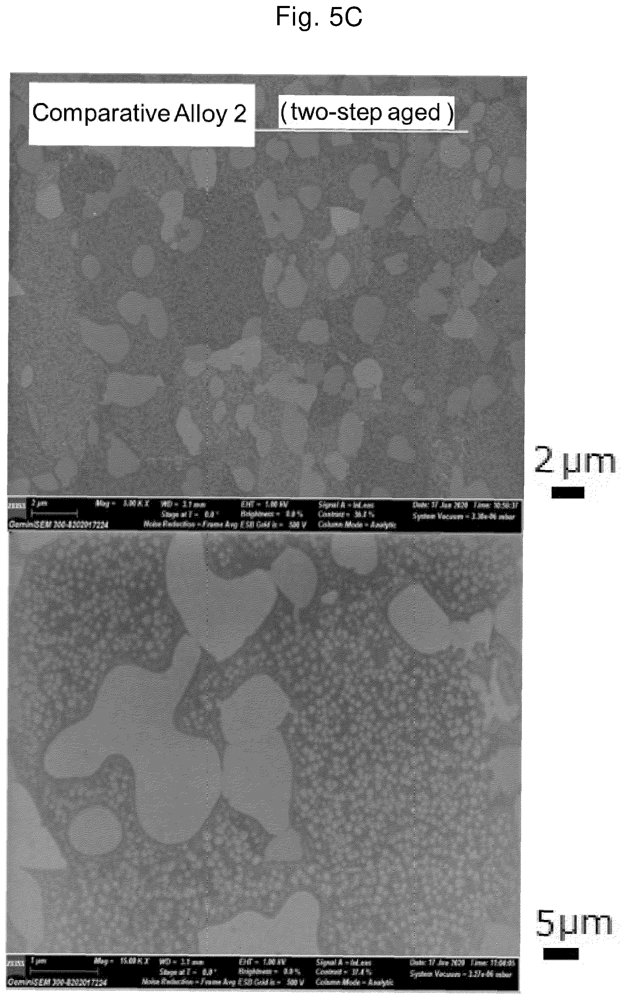

Figs. 5A, 5B, and 5C show SEM photographs of respective microstructures; Fig. 5A shows example alloy 2 (aging at 870°C), Fig. 5B shows example alloy 2 (two-step aging), and Fig. 5C shows comparative alloy 2 (two-step aging). The SEM photographs were taken with model Gemini 300 manufactured by Carl Zeiss AG. As shown in Fig. 5B, in example alloy 2 subjected to two-step aging heat treatment, typical fine crystal grains pinned in primary γ' and precipitation of a large amount of secondary γ' within the grains are confirmed. As described above, various process conditions were examined, and finally, optimal process conditions capable of forming a high-quality structure having a uniform crystal grain size and a fine γ' precipitate distribution were established.

### <Evaluation of structure stability (powder sintered material)>

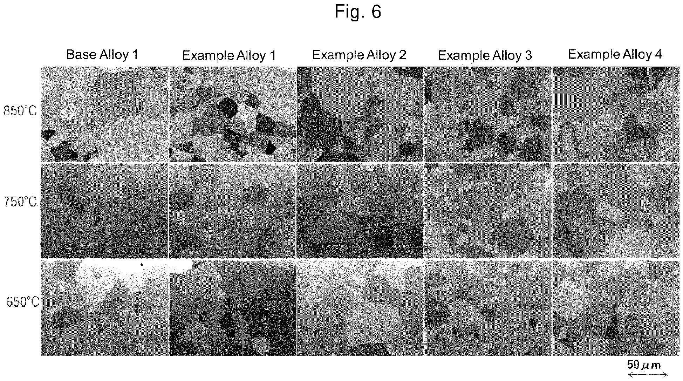

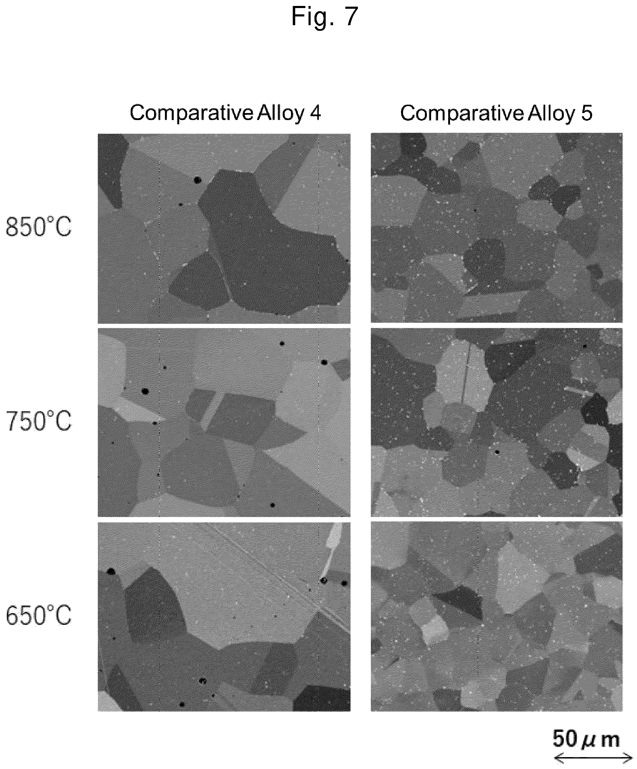

Long-time aging tests were performed at 650°C, 750°C, and 850°C, which are assumed operating temperature ranges of turbine disks, on solution aged materials of example alloys and comparative alloys experimentally produced as powder sintered materials. Fig. 6 is scanning electron microscope (SEM) photographs showing results of structure observation of some of the example alloys aged for a long time (3000 hours), showing cases of aging temperatures of 650, 750, and 850°C for each of base alloy 1 and example alloys 1 to 4. Fig. 7 is scanning electron microscope (SEM) photographs showing results of structure observation of some of comparative alloys aged for a long time (3000 hours), showing cases of aging temperatures of 650, 750, and 850°C for each of comparative alloy 4 and comparative alloy 5. In addition, measurement results of precipitates harmful to strength (TCP phase, beta phase, Laves phase, and the like) precipitated in a structure stability test at an aging temperature of 850°C and an aging time of 3000 hours are shown in Table 2.

### <Amount of harmful precipitates>

**[Table 2]**

| **Alloy Name** | **Amount of harmful precipitates (volume fraction, %)** |
|---|---|
| Base Alloy 1 | 1.8 |
| Example Alloy 1 | Not Detected |
| Example Alloy 2 | Not Detected |
| Example Alloy 3 | Not Detected |
| Example Alloy 4 | Not Detected |
| Comparative Alloy 4 | 0.3 |
| Comparative Alloy 5 | 0.8 |

From these results, it was found that the structure stability of the powder sintered materials was improved in the order of example alloys > comparative alloys. This depends on the addition amount of a heavy element such as Mo, Nb, Ta, or Hf, which induces precipitation of a harmful third phase. In particular, addition of Nb, Ta, Hf, or the like, which is a strengthening element actively added in PM alloys manufactured by major manufacturers in various countries of the world, induces precipitation of a large amount of harmful phases in the grains and at the grain boundaries, as can be seen from the structure observation results of comparative alloy 5 and comparative alloy 4 in Fig. 7. On the other hand, it is concluded that the example alloys, that do not contain Mo, Nb, and Hf and in which the addition amount of Ta is smaller than that of the current material, are a very promising alloy system. With respect to the base alloy, precipitation of a TCP phase and a beta phase was confirmed in base alloy 1 aged at 850°C. On the other hand, in example alloys 1 to 5 in which Co-12.5% by mass Ti is added to base alloy 1, the contents of Ta and W relatively decrease due to an increase in the contents of Co and Ti as compared with base alloy 1, and thus the structure stability is improved. From the above, it is concluded that particularly example alloys 1, 2, 3, and 4 exhibit excellent structure stability in the operation temperature range for turbine disk applications.

From the above, it is concluded that the nickel-cobalt-based alloy of the present invention preferably has a characteristic in which precipitates harmful to strength are not precipitated in an amount of 1.0% by volume or more, preferably precipitated in an amount of 0.5% by volume or less, and more preferably precipitated in an amount of 0.1% by volume or less in a structure stability test at 850°C for 3000 hours.

### <Creep characteristics of example alloys and comparative alloys (single crystal material)>

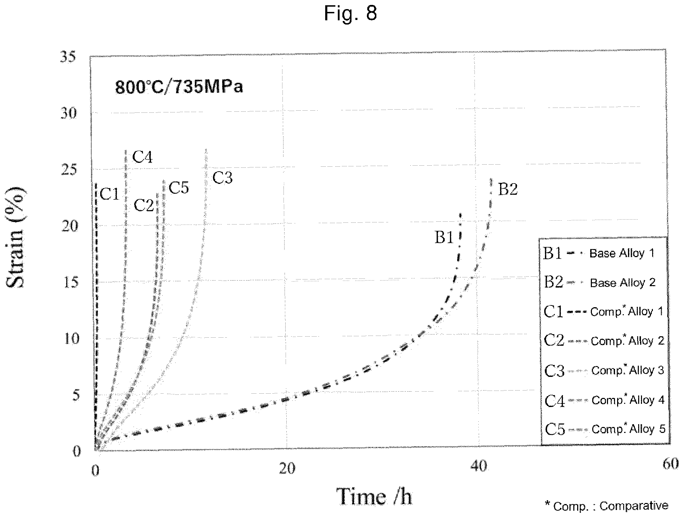

A tensile creep rupture test was performed under the condition of a load stress of 735 MPa at 800°C using an experimentally produced material of a single crystal material. Fig. 8 is a graph showing results of tensile creep tests for base alloys and comparative alloys. Under the present test conditions, comparative alloy 3, which is an alloy developed by the present applicant, exhibited the longest life among the comparative alloys, and the rupture life thereof was t_{f} = 11.9 h. In addition, comparative alloy 1 had the shortest life, and the rupture life was 0.42 h. The rupture life is in the order of comparative alloy 3 > comparative alloy 5 > comparative alloy 2 > comparative alloy 4 > comparative alloy 1, and from this result, it is found that comparative alloy 3 and comparative alloy 2, which are nickel-cobalt-based alloys, exhibit excellent creep characteristics. On the other hand, base alloy 1 and base alloy 2 exhibited extremely excellent creep characteristics as compared with the comparative alloys. The rupture lives of base alloy 1 and base alloy 2 were t_{f} = 38.39 h and t_{f} = 41.64 h, respectively.

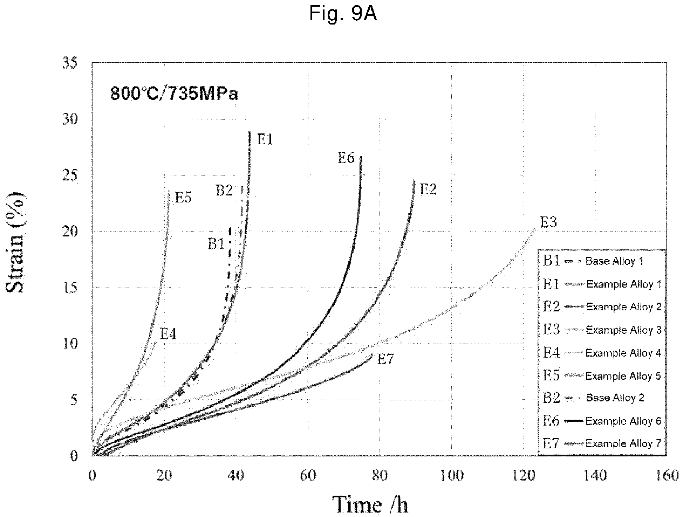

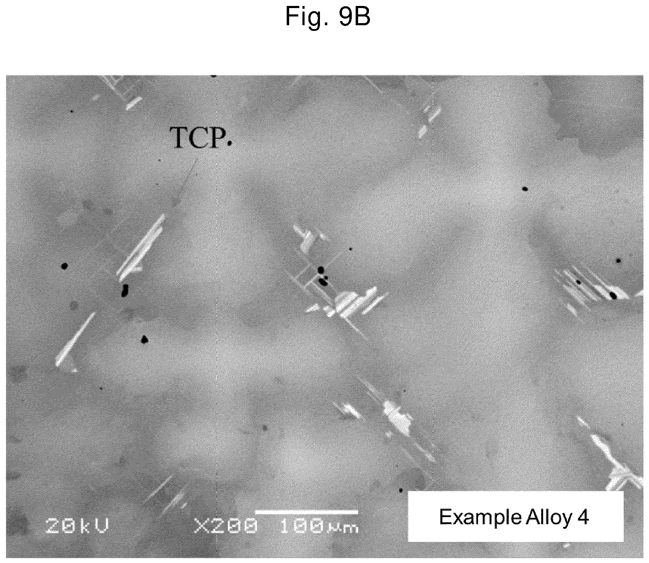

Fig. 9A is a graph showing results of creep rupture tests at 800°C and 375 MPa for each of base alloys 1 and 2 and example alloys 1 to 7. Here, when attention is paid to the creep characteristics of base alloy 1 and example alloys 1, 2, 3, and 4 in which Co-12.5% by mass Ti is added to base alloy 1, it is found that the life is prolonged as the amount of Co-12.5% by mass Ti added to base alloy 1 is increased, and example alloy 3 containing 30% by mass or more of Co has a maximum value of t_{f} = 123.22 h. Therefore, it is demonstrated that the combined addition of Co and Ti by addition of a cobalt-titanium alloy (Co-12.5% by mass Ti) having a similar γ + γ' two-phase structure to a nickel-based alloy or a nickel-cobalt-based alloy, which is a conventional alloy for a turbine blade, is extremely effective for improving the creep life. On the other hand, example alloy 4 containing 40% by mass of Co shows creep life shorter than that of base alloy 1. This is because, as shown in Fig. 9B, a large amount of the TCP phase (harmful phase), 2.1% by volume, was present in the finally solidified part of the initial structure.

In example alloy 5, in which Co-12.5% by mass Ti and Al were added to base alloy 1, a decrease in life caused by the remaining portion of the eutectic γ' phase was observed. In addition, in example alloys 6 and 7 in which Co-12.5% by mass Ti was added to base alloy 2, the life tended to be prolonged as the addition amount of Co-12.5% by mass Ti was increased.

### <Creep characteristics of example alloys and comparative alloys (cast and wrought material)>

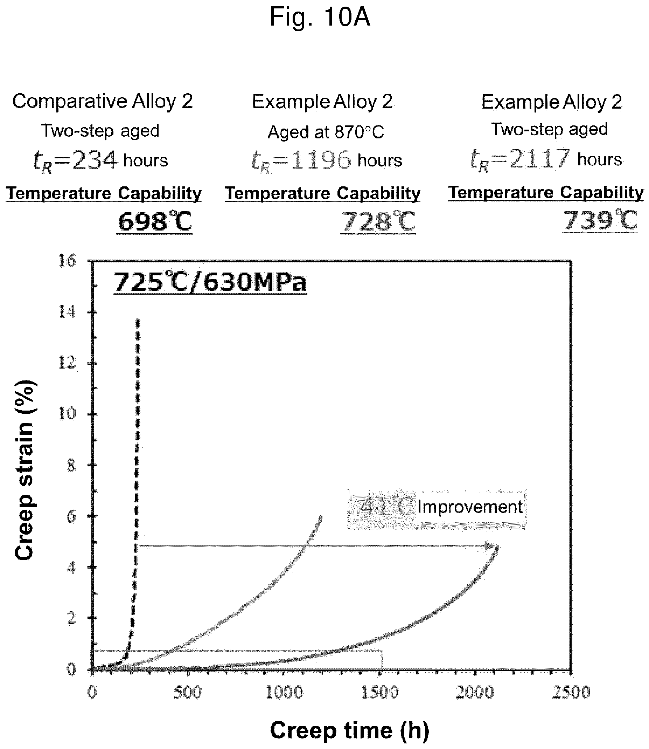

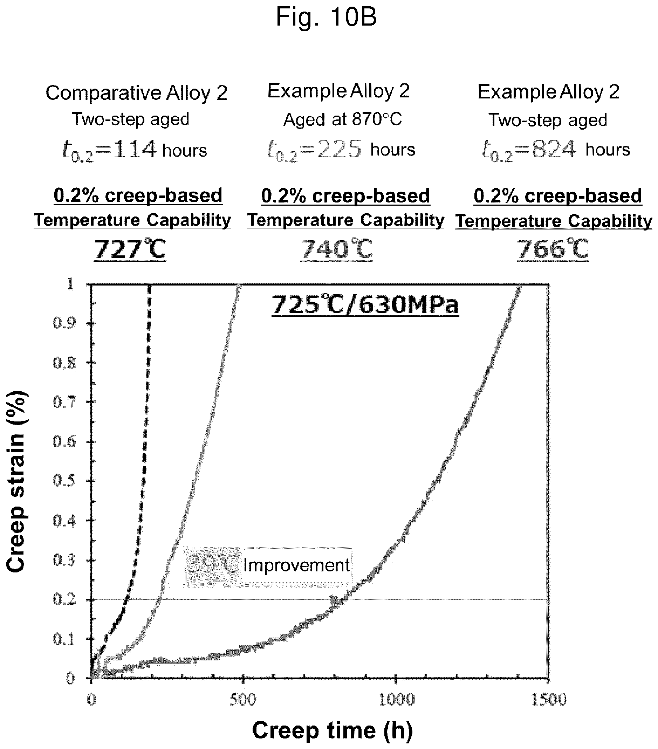

Fig. 10A is a graph showing creep characteristics for cast and wrought materials of example alloy 2 and comparative alloy 2, which are overall curves up to a region where the creep strain exceeds 5%. Fig. 10B shows a curve obtained by enlarging a region in Fig. 10 A, where the creep strain is up to 1%. Fig. 10A shows a creep temperature capability based on the creep time to rupture in the creep rupture test results at 725°C and 630 MPa. The creep temperature capability of comparative alloy 2 is 698°C, whereas that of the 870°C aged material of example alloy 2 is 728°C, and that of the two-step aged material of example alloy 2 is 739°C. Fig. 10B shows a creep temperature capability based on the creep time at which the creep strain is 0.2% in the creep rupture test results at 725°C and 630 MPa. The creep temperature capability of comparative alloy 2 is 727°C, whereas that of the 870°C aged material of example alloy 2 is 740°C, and that of the two-step aged material of example alloy 2 is 766°C.

As shown in Fig. 10A, example alloy 2 shows about 10 times better rupture life than comparative alloy 2, showing the world's highest durable temperature as a current C&W material. In addition, as a result of successful decomposition of the harmful PPB by the plastic working process, creep rupture elongation of about 5% was exhibited. Further, when example alloys 2 were compared with each other, as shown in Figs. 10A and 10B, the two-step aged material in which finer precipitates are precipitated had more excellent creep characteristics even when evaluated in terms of rupture life or in terms of 0.2% creep time.

### <Durable temperature of example alloys and comparative alloys (cast and wrought material)>

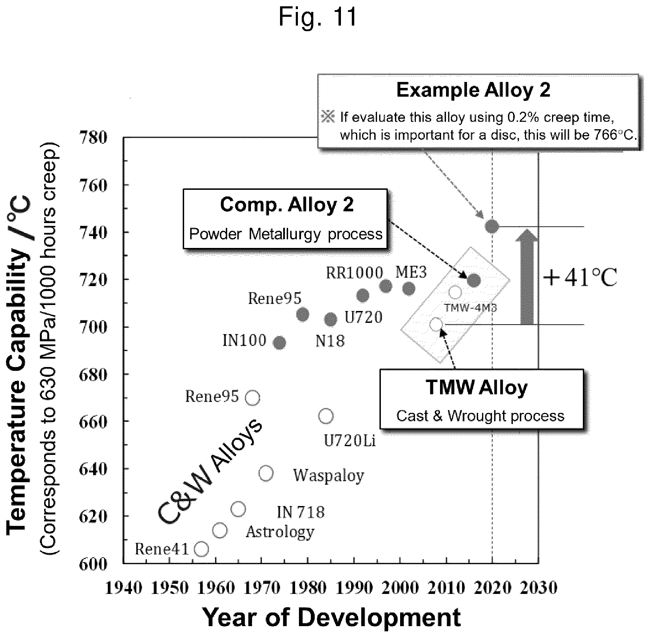

Fig. 11 is a plot showing temperature capabilities of C&W alloys by a conventional cast and wrought process, conventional nickel-cobalt-based alloys by a powder metallurgy process, and example alloy 2, in which the vertical axis indicates temperature capability and the horizontal axis indicates development years. In Fig. 11, a white circle o indicates a C&W alloy, and a black circle • indicates a powder metallurgy process alloy. In addition, Fig. 11 shows temperature capabilities of example alloy 2 and comparative alloy 2 experimentally produced as cast and wrought materials. The creep life of example alloy 2 at 725°C/630 MPa is about 2100 hours, and the temperature capability corresponds to 739°C in terms of creep rupture life. Furthermore, the temperature capability in terms of 0.2% creep life, which is important for disk alloys (alloys for a turbine disk) that are life limited parts, was 766°C. As described above, example alloy 2 exhibited the highest temperature capability in the world at the present stage as a cast and wrought material. As described above, the temperature capability of the PM materials has improved only by 22°C in 28 years from 693°C (IN100) to 715°C (ME3) from 1974 to 2002, which is an improvement rate of 0.79°C/year. Example alloy 2 has an improved temperature capability of 24°C as compared to ME3. From this, it is concluded that the design guideline of a novel nickel-cobalt-based alloy using an alloy for a turbine blade as a base alloy is extremely effective as a technique for significantly improving the temperature capability while maintaining the manufacturability of gas turbine disks.

### <Compressive strength of example alloys and base alloys (powder sintered material)>

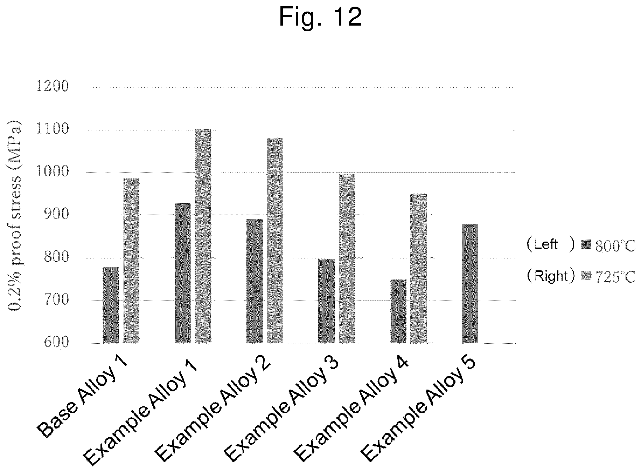

A compression test was performed on some of the base alloys and example alloys manufactured as powder sintered materials at temperatures of 725°C and 800°C. As shown in Fig. 12, it has been found that example alloys 1 to 5 in which Co-12.5% by mass Ti is added to base alloy 1 exhibits a 0.2% proof stress higher than that of base alloy 1 except for example alloy 4. Here, the 0.2% proof stress refers to a stress value when the strain reaches 0.2% when a test is performed at a specified temperature and a strain rate of 10⁻⁵ (/s). In base alloy 1, the 0.2% proof stresses at 725°C and 800°C were 980 MPa and 780 MPa, respectively. On the other hand, in example alloy 1, the 0.2% proof stresses at 725°C and 800°C were 1100 MPa and 930 MPa, respectively. In example alloy 2, the 0.2% proof stresses at 725°C and 800°C were 1080 MPa and 890 MPa, respectively. In example alloy 3, the 0.2% proof stresses at 725°C and 800°C were 990 MPa and 795 MPa, respectively. In example alloy 4, the 0.2% proof stresses at 725°C and 800°C were 950 MPa and 750 MPa, respectively. In example alloy 5, the 0.2% proof stress at 800°C is 880 MPa, and no data is acquired for 725°C.

From these results, the 0.2% proof stresses of these example alloys significantly increased with an increase in the amount of Co-12.5% by mass Ti added to a base alloy, and then gradually decreased. It is considered that the alloy having the maximum strength is present between example alloy 1 and example alloy 2 following the design guideline of this example based on base alloy 1. The increase in 0.2% proof stress up to example alloy 1 is considered to be an effect due to the increase in the volume fraction of precipitated phase and the Ti content. On the other hand, the gradual decrease from example alloy 2 to example alloy 4 is considered that the contents of Cr and W, which are main solid solution strengthening elements of the alloy matrix, decreased by the addition of Co-12.5% by mass Ti to base alloy 1.

### <Oxidation resistance of example alloys and comparative alloys (powder sintered material)>

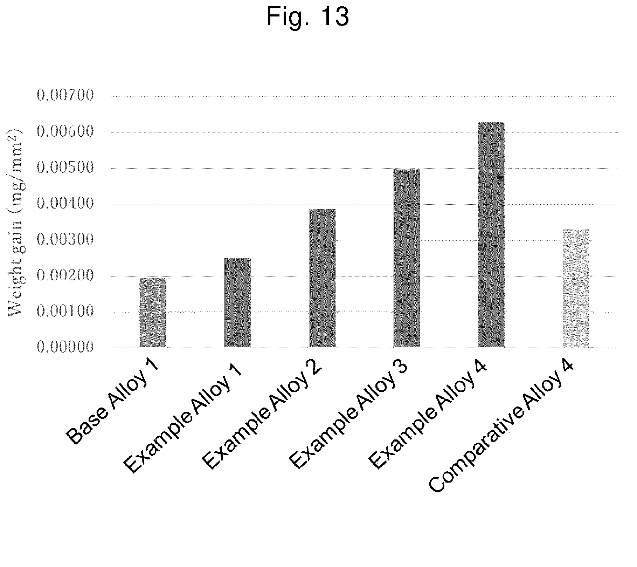

An isothermal oxidation tests were performed at 650°C, 750°C, and 850°C for 500 hours on solution aged materials of example alloys and comparative alloys experimentally produced as powder sintered materials. Fig. 13 shows, as an example, results of weight increasing of example alloys 1, 2, 3, and 4. By adding Co-12.5% by mass Ti to base alloy 1, the oxidation resistance is decreased. This decrease is considered to be caused by a decrease in the content of Al or Cr forming an oxide film. However, the oxidation resistance of these example alloys is not inferior to that of comparative alloy 4, which is a commercial alloy, and it is considered that there is no problem in practical use.

### <Summary of comparison between example alloys and comparative alloys>

As described above, the example alloys exhibit excellent creep strength, temperature capability, and compressive strength as compared with the comparative alloys, and have sufficient oxidation resistance, and it was confirmed that the alloy for a turbine disk can be improved based on a new design method based on an alloy for a turbine blade proposed by the present inventor.

Although some embodiments of the present invention have been described, these embodiments have been presented as examples, and are not intended to limit the scope of the invention. These novel embodiments can be implemented in various other forms, and various omissions, substitutions, and changes can be made without departing from the gist of the invention. These embodiments and modifications thereof are included in the scope and gist of the invention, and are included in the invention described in the claims and the equivalent scope thereof.

### Industrial Applicability

It has been revealed that a novel nickel-cobalt-based alloy having excellent creep strength, temperature capability, compressive strength, and sufficient oxidation resistance and exhibiting good forgeability can be obtained by combined addition of cobalt and titanium according to the design guideline of adding a cobalt-titanium alloy (Co-12.5% by mass Ti in the above-described Examples) having a γ + γ' two-phase structure similar to a nickel-based alloy for a turbine blade as a base alloy. Specifically, it was shown that the example alloys described above are an alloy system more suitable for powder manufacture (low cost and more suitable for mass production) than the comparative alloys. In addition, it was demonstrated that billets having a homogeneous microstructure can be manufactured by either a casting process or a powder metallurgy process, and manufacturability at an industrial level was confirmed. By using the nickel-cobalt-based alloy of the present invention, it is possible to prolong the life of a member used in a high-temperature environment such as a gas turbine member and to improve the efficiency of a gas turbine main body or the like by using the member in a more severe environment, and application to a hydrogen mixed combustion/hydrogen gas turbine, an ammonia mixed combustion gas turbine or the like that is planned in the future is also expected.

## Claims

1. A nickel-cobalt-based alloy comprising a chemical composition containing:
15% by mass or more and 43% by mass or less of cobalt;
6% by mass or more and less than 12% by mass of chromium;
3% by mass or more and 9% by mass or less of tungsten;
1% by mass or more and 6% by mass or less of aluminum;
1% by mass or more and 8% by mass or less of titanium;
7% by mass or less of tantalum;
0.01% by mass or more and 0.15% by mass or less of carbon;
0.01% by mass or more and 0.15% by mass or less of boron;
0.01 mass or more and 0.15% by mass or less of zirconium; and the balance nickel and inevitable impurities.

2. The nickel-cobalt-based alloy as claimed in claim 1, wherein the composition contains:
15% by mass or more and 43% by mass or less of cobalt;
6% by mass or more and less than 12% by mass of chromium;
3% by mass or more and 9% by mass or less of tungsten;
1% by mass or more and 6% by mass or less of aluminum;
1% by mass or more and 8% by mass or less of titanium;
1.7% by mass or more and 7% by mass or less of tantalum;
0.01% by mass or more and 0.15% by mass or less of carbon;
0.01% by mass or more and 0.15% by mass or less of boron;
0.01 mass or more and 0.15% by mass or less of zirconium; and the balance nickel and inevitable impurities.

3. The nickel-cobalt-based alloy as claimed in claim 1 or 2, wherein the composition contains:
15% by mass or more and 35% by mass or less of cobalt;
7% by mass or more and less than 12% by mass of chromium;
5.5% by mass or more and 8.5% by mass or less of tungsten;
2% by mass or more and 4% by mass or less of aluminum;
4% by mass or more and 7% by mass or less of titanium;
1.7% by mass or more and 7% by mass or less of tantalum;
0.01% by mass or more and 0.15% by mass or less of carbon;
0.01% by mass or more and 0.15% by mass or less of boron;
0.01 mass or more and 0.15% by mass or less of zirconium; and the balance nickel and inevitable impurities.

4. The nickel-cobalt-based alloy as claimed in any one of claims 1 to 3, wherein the composition contains:
15% by mass or more and 33% by mass or less of cobalt;
8.9% by mass or more and less than 12% by mass of chromium;
6.0% by mass or more and 8.3% by mass or less of tungsten;
2.5% by mass or more and 3.5% by mass or less of aluminum;
4.4% by mass or more and less than 6.5% by mass of titanium;
1.8% by mass or more and 2.5% by mass or less of tantalum;
0.01% by mass or more and 0.15% by mass or less of carbon;
0.01% by mass or more and 0.15% by mass or less of boron;
0.01 mass or more and 0.15% by mass or less of zirconium; and the balance nickel and inevitable impurities.

5. The nickel-cobalt-based alloy as claimed in any one of claims 1 to 4, further containing at least one optional composition element selected from the group consisting of:
less than 1.5% by mass of molybdenum;
5% by mass or less of niobium; and
2% by mass or less of hafnium.

6. The nickel-cobalt-based alloy as claimed in any one of claims 1 to 5, further containing at least one optional composition element selected from the group consisting of:
0.5% by mass or less of vanadium;
0.1% by mass or less of silicon;
0.05% by mass or less of calcium;
0.2% by mass or less of yttrium; and
0.2% by mass or less of a lanthanoid element.

7. The nickel-cobalt-based alloy as claimed in any one of claims 1 to 6, wherein precipitates harmful to strength are not precipitated in an amount of 1.0% by volume or more in a structure stability test at 850°C for 3000 hours.

8. The nickel-cobalt-based alloy as claimed in any one of claims 1 to 6, wherein a 0.2% proof stress at 800°C and a strain rate of 10⁻⁵ (/s) is 780 MPa or more.

9. A nickel-cobalt-based alloy member comprising the nickel-cobalt-based alloy as claimed in any one of claims 1 to 6.

10. The nickel-cobalt-based alloy member as claimed in claim 9, wherein the nickel-cobalt-based alloy member is a turbine disk.

11. A method for manufacturing a nickel-cobalt-based alloy member, wherein the nickel-cobalt-based alloy member as claimed in claim 9 is manufactured by one or more methods selected from the group consisting of casting including a directional solidification method, conventional forging, powder metallurgy, lamination molding using a metal powder, and three-dimensional molding using a wire.

12. A method for manufacturing a nickel-cobalt-based alloy member, wherein the nickel-cobalt-based alloy turbine disk as claimed in claim 10 is manufactured by one or more methods selected from the group consisting of casting including a directional solidification method, conventional forging, powder metallurgy, lamination molding using a metal powder, and three-dimensional molding using a wire.

13. The method for manufacturing a nickel-cobalt-based alloy member as claimed in claim 11 or 12, wherein the metal powder is a metal powder prepared by a gas atomization method.
